# EUROPEAN PATENT APPLICATION

(11) **EP 4 806 671 A1**
(43) Date of publication of application: **16.09.2026**
(21) Application number: 26163942.1
(22) Date of filing: 11.03.2026
(51) Int. Cl.: B60C 25/05, B60C 25/138

(54) **TOOL FOR MOUNTING AND DISMOUNTING VEHICLE WHEEL TIRES, ESPECIALLY FOR TYRE CHANGING MACHINES**

(30) Priority: 13.03.2025 IT 202500005198
(71) Applicant: Giuliano Group S.p.A., 42015 Correggio (RE) (IT)
(72) Inventor: VIGNOLI, Giuliano, 42015 Correggio (RE) (IT)
(74) Representative: Grana, Daniele

(57) **Abstract**

The tool assembly for mounting and dismounting vehicle wheel tires comprises an operating head for mounting/dismounting a tire on/from the rim of a wheel, provided with a dismounting tool associated with an actuator device and rotatable between an insertion position between an edge of the rim and a portion of the tire bead, a position for engaging the portion of the bead, and a position for extracting the portion of the bead, wherein the tool assembly comprises means for moving the operating head and the tool, operatively connected to the actuator device and configured to translate the operating head along a substantially curvilinear direction and, simultaneously, rotate the tool between an insertion configuration, an engagement configuration and an extraction configuration.

## Description

### Technical Field

The present invention relates to a tool for mounting and dismounting vehicle wheel tires, which can be used in particular in tire changing machines.

### Background Art

It is known that vehicle wheels comprise a metal rim with annular ridges around the perimeter designed to seat the end portions, known as "beads," of an elastic tire.

Also known is the use of machines, known as "tire changers," designed to remove and mount tires from or onto their rims for maintenance, repair, or replacement.

These tire changers generally comprise a frame supporting attachment and rotation devices for the wheel rim on which a tire is to be mounted or removed, and one or more tools for mounting and demounting the tire.

Automatic tire changers, in particular, are known that comprise an operating head equipped with a tire demounting tool and associated with a frame that can be moved vertically and horizontally by means of actuators.

The demounting tool extends along a substantially transverse direction with respect to the longitudinal axis of the operating head, toward the wheel to be removed, and is equipped with a curved end portion designed to grip the tire bead.

Specifically, the demounting tool can be rotated, by means of a respective actuator, around a horizontal axis between a bead engagement configuration, in which it is inclined toward the wheel rim, a first tire edge-drag configuration, in which it is arranged substantially vertically, and a second tire edge-drag configuration, in which it is inclined away from the wheel rim.

During use, an operator positions and locks the wheel onto the attachment and rotation means and, using a special bead breaker tool, performs a preliminary detachment of the tire bead from the rim flanges. Subsequently, the operator adjusts the position of the operating head relative to the frame based on the specific wheel dimensions.

Specifically, this adjustment is performed by moving the operating head vertically using a first actuator and horizontally using a second actuator.

The head is then lowered and the end of the tool presses the tire sidewall until it is inserted between the tire bead and the corresponding cuff on the rim. A third actuator is activated to move the tool into the clamping configuration, in which the hooked end of the tool is positioned to retain the tire bead.

The tool is then positioned in the first holding configuration and the operating head is raised to extract a portion of the bead above the rim.

To facilitate bead extraction, the tool is positioned in the second holding configuration by the third actuator and, simultaneously, to avoid excessive tire deformation, the operating head is moved horizontally and by means of the second actuator towards the rim's rotation axis.

The rotation of the rim then allows the entire bead to emerge from its respective cuff.

To simplify and make tire removal operations more efficient, numerous tire changing machines have been developed, which integrate specific tools for performing the removal and assembly operations.

For example, document EP1593533B1 describes a machine that uses a working head equipped with a demounting tool, capable of performing pendulum movements to engage and drag the tire bead. This solution, while partially automating the process, requires the use of a support that can be positioned against the rim prior to moving the tool, increasing structural and operational complexity.

Document EP2062752B1 proposes a configuration in which a mobile work unit includes lever systems and motion transformation mechanisms. These systems translate the movement of the relevant actuators into an accurate translation of the working head along a curved path, adapting to the profile of the rim's bead. However, to achieve precise movements, the use of connecting elements and structural guides is necessary, which, while ensuring functionality, increase the system's overall cost and footprint.

Document EP1177920B3 illustrates additional solutions for tire mounting and demounting, focusing on tool configuration and simplification of actuation mechanisms. However, this solution requires the coordination of complex movements, including reproducing the action of a bead lifter with additional movements of the spindle or carriage, thus highlighting some operational criticalities, especially when using tires with variable bead thicknesses.

In summary, although known solutions ensure successful tire mounting and demounting, they have limitations related to the complexity of coordinating the actuators and the use of bulky and expensive motion control components.

### Description of the Invention

The primary purpose of the present invention is to provide a tool for mounting and demounting vehicle tires, particularly for use in tire changing machines, that allows for the introduction of an autonomous and predefined pendulum motion of the tool, capable of replicating the movement of a bead lever in an integrated and compact manner, eliminating the need for additional spindle or carriage movements and thus simplifying the overall structure of the machine.

Another purpose of the present invention is to provide a tool for mounting and demounting vehicle tires, particularly for use in tire changing machines, that is capable of performing a combined pendulum motion, both axially and toward the center of the rim, to engage the tire bead and, subsequently, a rotation around the rim edge, significantly simplifying the operator's work thanks to a predefined movement.

Another purpose of the present invention is to provide a tool for mounting and demounting vehicle tires, particularly for use in tire changing machines, that is capable of performing a combined pendulum motion, both axially and toward the center of the rim, to engage the tire bead and then rotates around the rim edge, thus significantly reducing the stress to which the tire is subjected during the demounting operation and thus avoiding the risk of damage to the tire itself. Another purpose of the present invention is to provide a tool for mounting and demounting vehicle tires, particularly for use in tire changing machines, that eliminates the need for robust and expensive guides for the radial or axial movement of the spindle.

Another purpose of the present invention is to provide a tool for mounting and demounting vehicle tires, particularly for use in tire changers, that allows the tool's pendulum motion mechanism to be concentrated in an extremely compact area. This not only allows the tool to perform its primary bead extraction function in a complete machine, but also opens the possibility of integrating it into optional accessories for tire changers not equipped with leverless systems, or of complementing existing ones, particularly when working with wheels with significantly protruding spokes or camber.

Another purpose of the present invention is to provide a tool for mounting and demounting vehicle tires, particularly for use in tire changers, that, with appropriate scaling modifications, can be used on tire changers designed for heavy vehicle wheels.

This new configuration therefore offers significant advantages in terms of structural simplicity, cost reduction, operational reliability, and application versatility, representing a significant advance over currently known patented solutions.

The above-mentioned purposes are achieved by the present tool for mounting and dismounting vehicle wheel tires, which can be used in particular in tire changing machines, according to the combination of features described in claim 1.

### Brief Description of the Drawings

Other features and advantages of the present invention will become more apparent from the description of a preferred, but not exclusive, embodiment of a tool for mounting and demounting vehicle tires, particularly for use in tire changing machines. This embodiment is illustrated, by way of example but not limitation, in the accompanying drawings, wherein:
Figure 1 is an axonometric view schematically illustrating the tool according to the invention applied to a generic tire changing machine;
Figures 2 through 6 are side and sectional views of the tool according to the invention in different operating positions during a tire removal operation.

### Embodiments the Invention

With specific reference to these figures, the reference numeral 1 generally indicates a tool assembly for mounting and dismounting vehicle wheel tires.

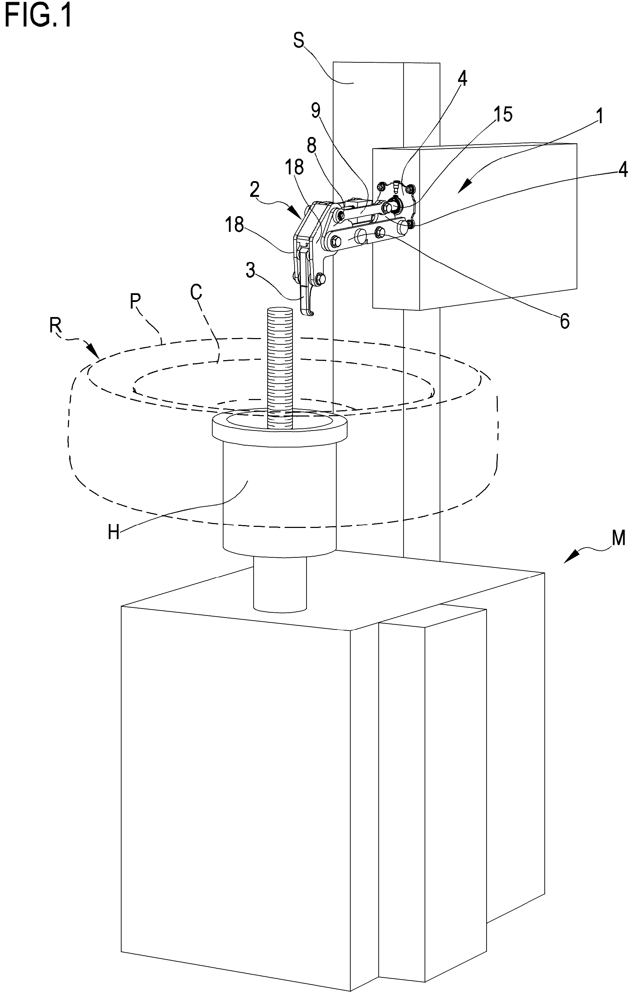

As illustrated schematically in Figure 1, the tool assembly 1 is associated with a support structure S of a tire changing machine M equipped with means H for attaching and rotating the rim C of a vehicle wheel R.

The tool assembly 1 comprises at least one operating head 2 for mounting/dismounting a tire P on/from said rim C.

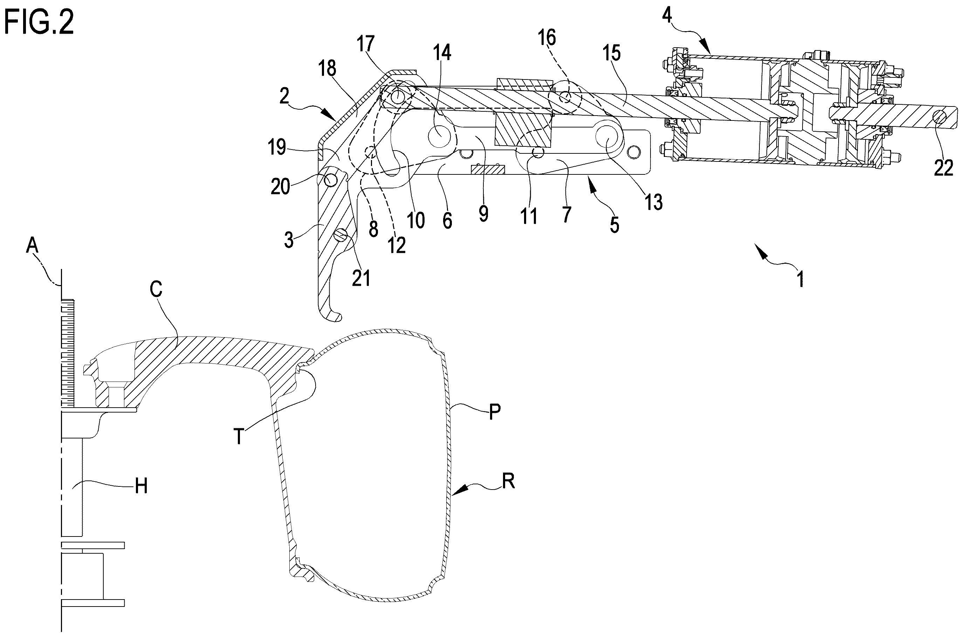

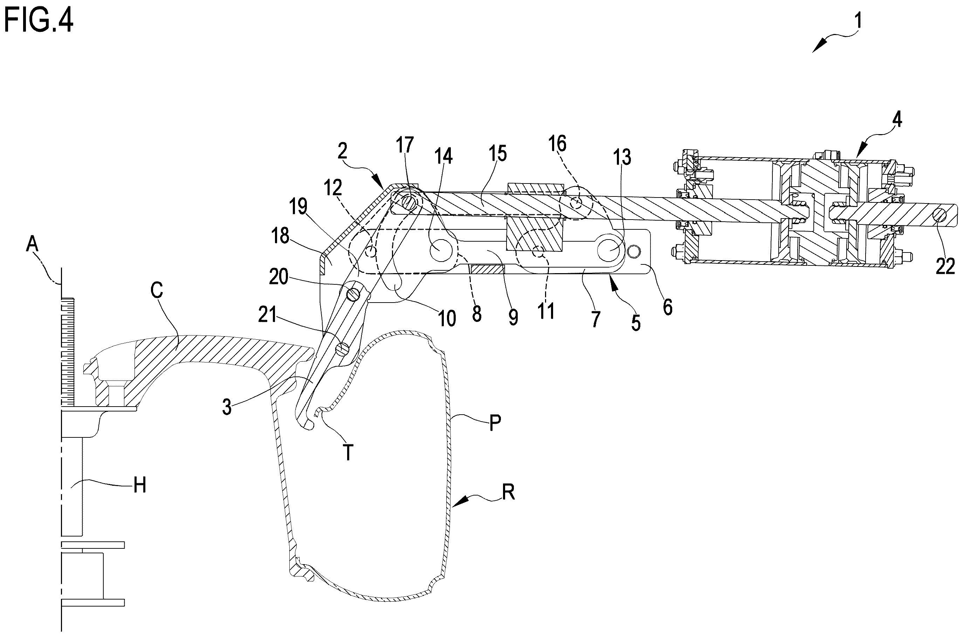

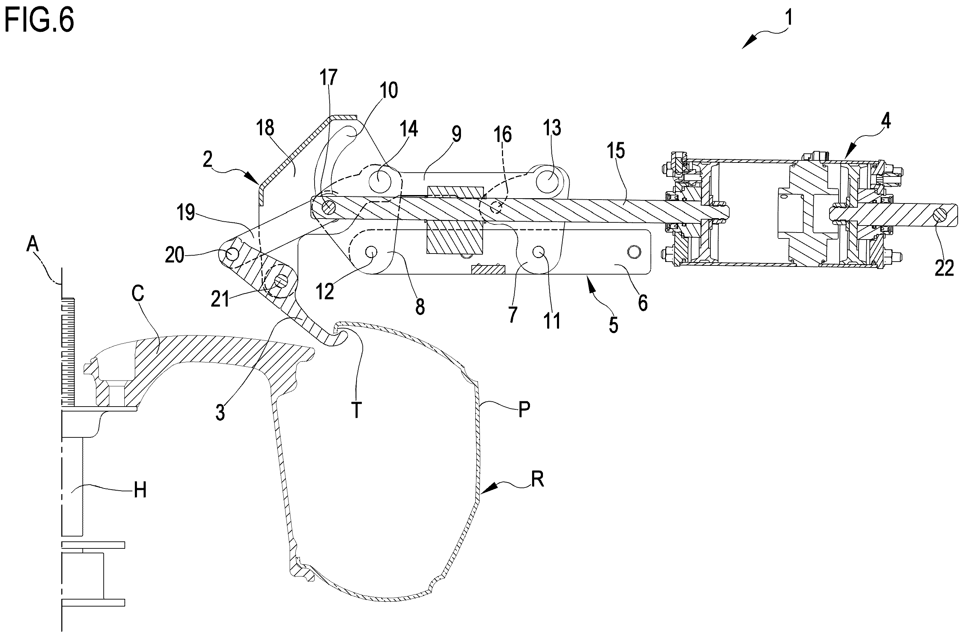

The operating head 2 is equipped with at least one dismounting tool 3 associated with an actuator device 4 and rotatable between:
- an insertion position between an edge of the rim C and a section of the bead T of the tire P, in which the tool 3 extends along a direction substantially parallel to the rotation axis A of the rim C (Figures 2, 3, and 5);
- a bead section T engagement position, in which tool 3 is substantially inclined toward the rotation axis A of circle C (Figure 4);
- a bead section T extraction position, in which tool 3 is substantially inclined in the opposite direction to the rotation axis A of circle C (Figure 6).

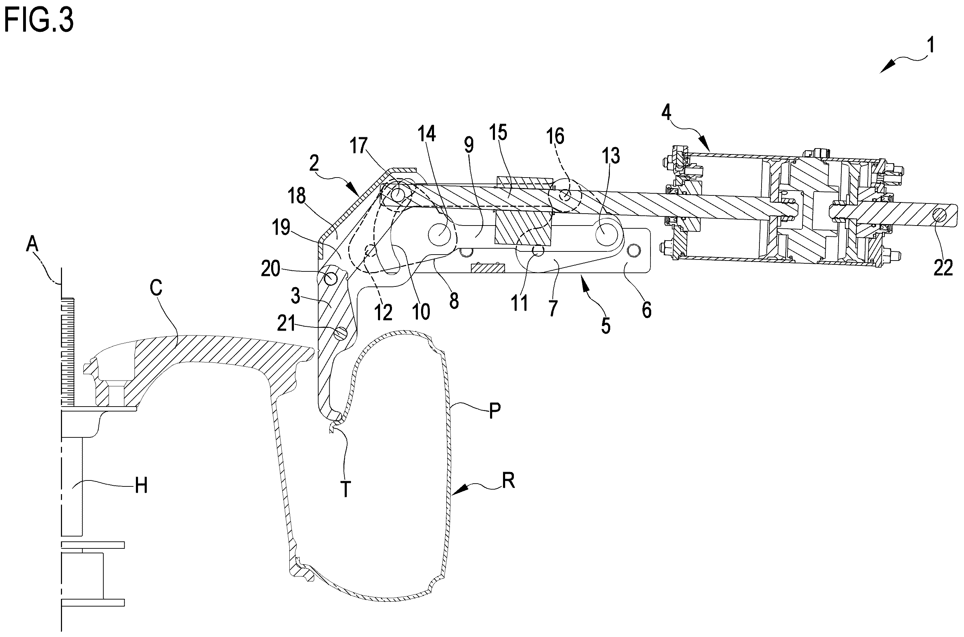

According to the invention, the tool assembly 1 comprises means 5 for moving the operating head 2 and the tool 3, operatively connected to the actuator device 4 and configured to:
- translate the operating head 2 along a substantially curvilinear direction and, simultaneously, rotate the tool 3 between an insertion configuration (Figure 3), in which the tool 3 is in the insertion position and close to the edge of the circle C, inserted at least partially beneath the edge to press and push the bead T away from the edge, and a coupling configuration (Figure 4), in which the tool 3 is in the coupling position and the operating head 2 is substantially lowered and moved closer to the circle C, with respect to the insertion configuration, to grip the bead T by means of the tool 3;
- translate the operating head 2 along a substantially curvilinear direction and, simultaneously, rotate the tool 3 between the engagement configuration (figure 4) and an extraction configuration (figure 6), in which the tool 3 is in the extraction position and the head is substantially raised above the circle C and substantially brought closer to the rotation axis A of the circle C, with respect to the engagement and insertion configuration, to lift the bead T above the edge by means of the tool 3.

The movement means 5 comprise translation means 6, 7, 8, 9, 10 operatively connected to the actuator device 4 and to the operating head 2 and configured to transform the motion generated by the actuator device 4 into a translational motion of the operating head 2 along a substantially curvilinear direction between the insertion configuration, the coupling configuration and the extraction configuration.

The movement means 5 further comprise rotation means (19) operatively connected to the actuator device 4 and to the tool 3 and configured to transform the motion generated by the actuator device 4 into a rotational motion of the tool 3 between the insertion position when the operating head 2 is in the insertion configuration, the coupling position when the operating head 2 is in the coupling configuration and the extraction position when the operating head 2 is in the extraction configuration.

In particular, the combined action of the translation means 6, 7, 8, 9, 10 and the rotation means (19) allows the simultaneous translation of the operating head 2 and rotation of the tool 3.

In particular, with particular reference to a preferred embodiment of the tool assembly 1, the translation means 6, 7, 8, 9, 10 comprise a lever system 6, 7, 8, 9 associated with the operating head 2 and at least one curved linear guide 10 associated with the operating head 2 and operatively connected to said lever system 6, 7, 8, 9.

With reference to a possible embodiment, illustrated in the figures, the lever system 6, 7, 8, 9 is constituted by an articulated quadrilateral system comprising: at least one support element 6 of the operating head 2 associated with the support structure S of the tyre changing machine M, at least one first lever 7 rotatable associated with the element support element 6 at a first pin 11, at least one second lever 8 rotatably associated with the support element 6 at a second pin 12, at least one connecting bar 9 associated with the first and second levers 7, 8 at a third pin 13 and a fourth pin 14, respectively.

In particular, according to the preferred embodiment, the operating head 2 is hinged to the lever system 6, 7, 8, 9 at the fourth pin 14.

The actuator device 4 comprises at least one linear actuator equipped with at least one movable element 15 movable along a direction substantially transverse to the rotation axis A of the wheel R. The movable element 15 is connected to the lever system 6, 7, 8, 9.

Preferably, the movable element 15 is connected to at least one of the first lever 7 and the second lever 8.

In particular, according to a preferred embodiment, the movable element 15 is hinged to the first lever 7 and the second lever 8 at a fifth pin 16 and a sixth pin 17, respectively.

Preferably, the curved linear guide 10 consists of a curvilinear slot made on the operating head 2, and the lever system 6, 7, 8, 9 comprises at least one pin 17 inserted slidably inside the curvilinear slot 10, to transform the motion of the actuator device 4 into the translational motion of the operating head 2 during movement between the insertion, engagement, and extraction configurations. Preferably, the pin inserted and sliding inside the curved slot 10 corresponds to the sixth pin 17 connecting the movable element 15 of the actuator device 4 and the second lever 8.

Specifically, according to a possible embodiment, illustrated in the figures, the operating head 2 comprises at least one plate 18 provided with the curved slot 10. The second lever 8 is hinged to the plate 18 at the fourth pin 14 and is provided with the sixth pin 17 inserted and sliding inside the curved slot 10.

In this way, the rotation of the second lever 8 around the second pin 12 is transformed into a translation of the plate 18, and therefore of the operating head 2, along the curvilinear direction between the insertion, engagement, and extraction configurations.

Specifically, the operating head 2 comprises a pair of plates 18 coupled together.

According to a preferred embodiment, the rotation means (19) comprise at least one connecting element 19 between the lever system 6, 7, 8, 9 and the tool 3.

In particular, the tool 3 has a substantially elongated shape and has a free end provided with a substantially hooked section and suitable for contact with the heel section T, a substantially opposite end rotatably associated with the connecting element 19 in correspondence with a seventh pin 20 and a substantially intermediate section pivoted on the operating head 2 in correspondence with an eighth pin 21.

Specifically, the connecting element 19 comprises at least one rod provided with an end rotatably associated with the lever system 6, 7, 8, 9 in correspondence with the sixth pin 17 inserted slidingly inside the curvilinear slot 10 and an opposite end rotatably associated with the tool 3 in correspondence with the seventh pin 20.

Therefore, the translational motion of the operating head 2 between the insertion, engagement and extraction configurations, together with the sliding of the sixth pin 17 inside the curvilinear slot 10, are transmitted to the tool 3 via the connecting element 19, resulting in the simultaneous rotation of the tool 3 between the insertion, engagement and extraction positions respectively.

Preferably, the actuator device 4 is provided with a substantially opposite portion that is rotatably associated with the support structure S of the tire changing machine M at a ninth pin 22.

According to a possible embodiment of the operating head 2, the actuator device 4 comprises at least one pneumatic cylinder with a double stem, comprising a first stem corresponding to the moving element 15 and a second stem 23 that extends from a substantially opposite portion with respect to the first stem 15 and that is rotatably associated with the support structure S of the tire changing machine M at the ninth pin 22.

In practice, therefore, according to this possible embodiment, the actuator cylinder is able to independently actuate the movement of the first stem 15 and the second stem 23.

Conveniently, the actuator device 4 is configured to actuate the second stem 23 for the movement of the operating head 2 between the insertion configuration and said coupling configuration, and is configured to actuate the first stem 15 to move the working head 2 between the insertion configuration and the extraction configuration.

Therefore, according to this possible embodiment, the second stem 23 is actuated first to move the working head 2 from the insertion configuration to the engagement configuration and, subsequently, to return the working head 2 from the engagement configuration to the insertion configuration.

Subsequently, the first stem 15 is actuated to move the working head 2 from the insertion configuration to the extraction configuration.

The operation of the tool assembly 1 is briefly described below.

First, the tool assembly 2 is positioned above the wheel R, with the tool 3 in the insertion position, positioned above the tire P, near the edge of the rim C (Figure 2).

This positioning is performed by actuators of the tire changing machine M, not illustrated in the figures as they are of a conventional type.

Subsequently, again by the action of these actuator devices, the operating head 2 is lowered and brought into the insertion configuration, in which the tool 3 is in the insertion position and close to the edge of the circle C, inserted at least partially beneath the edge to press and remove the bead T from the edge itself (Figure 3).

Subsequently, the second stem 23 is actuated to move the operating head 2 from the insertion configuration to the engagement configuration, in which the tool 3 is in the engagement position and the operating head 2 is substantially lowered and brought closer to the circle C, compared to the insertion configuration, to grip the bead T using the tool 3 (Figure 4).

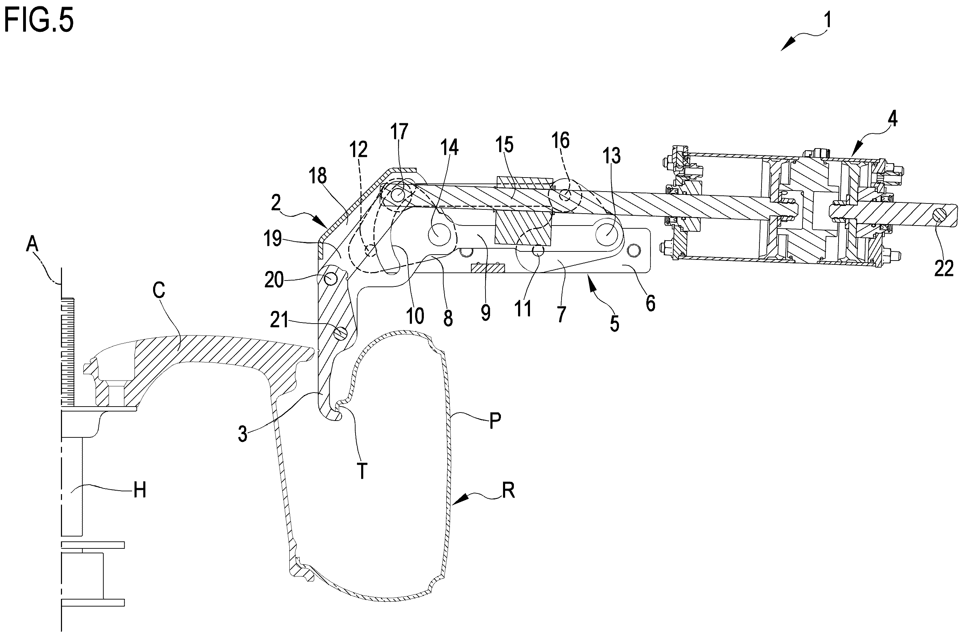

Subsequently, again by actuating the second stem 23, the operating head 2 is returned from the engagement configuration to the insertion configuration, removing the bead T from the edge of the circle C (Figure 5).

Finally, the first stem 15 is actuated to move the operating head 2 from the insertion configuration to the extraction configuration, in which the tool 3 is in the extraction position and the head is substantially raised above the rim C and substantially approached the rotation axis A of said rim C, with respect to the engagement and insertion configuration, to lift the bead T above the edge by means of the tool 3 (Figure 6).

In practice, it has been found that the described invention achieves the proposed objectives.

In particular, it is emphasized that the tool assembly according to the invention allows for the introduction of an autonomous and predefined pendulum movement of the tool, capable of replicating the movement of a bead lifting lever in an integrated and compact manner, eliminating the need for additional movements of the spindle or carriage and thus simplifying the overall structure of the machine.

Furthermore, the tool assembly according to the invention is capable of performing a combined pendulum movement, both axially and toward the center of the rim, to engage the tire bead and then rotate around the rim edge, significantly simplifying the operator's work thanks to a predefined movement. The invention also significantly reduces the stress to which the tire is subjected during the demounting operation, thus avoiding the risk of damage to the tire itself.

The tool assembly also eliminates the need for robust and expensive guides for the radial or axial movement of the spindle.

The tool assembly according to the invention allows the pendulum movement mechanism of the tool to be concentrated in an extremely compact area. This not only allows the tool to perform the primary function of bead extraction in a complete machine, but also opens the possibility of integrating it into optional accessories for tire changers not equipped with leverless systems, or to complement existing ones, particularly when working with wheels with significantly protruding spokes or camber.

Finally, with appropriate scaling modifications, the tool assembly can be used on tire changing machines intended for heavy vehicle wheels.

## Claims

1. Tool assembly (1) for mounting and dismounting vehicle wheel tires, associated with a support structure (S) of a tire changing machine (M) provided with means for attaching and rotating (H) the rim (C) of a vehicle wheel (R), comprising at least one operating head (2) for mounting/dismounting a tire (P) on/from said rim (C), said operating head (2) being provided with at least one dismounting tool (3) associated with an actuator device (4) and rotatable between:
- an insertion position between an edge of said rim (C) and a section of the bead (T) of said tire (P), in which said tool (3) extends along a direction substantially parallel to the rotation axis (A) of said rim (C);
- an engagement position of said section of the bead (T), in which said tool (3) is substantially inclined towards the rotation axis (A) of said rim (C);
- an extraction position of said bead section (T), in which said tool (3) is substantially inclined in the opposite direction to the rotation axis (A) of said rim (C);
**characterized in that** said tool assembly (1) comprises means for moving said operating head (2) and said tool (3), operatively connected to said actuator device (4) and configured to:
- translate said operating head (2) along a substantially curvilinear direction and, simultaneously, rotate said tool (3) between an insertion configuration, in which said tool (3) is in said insertion position and in proximity to said rim edge (C), inserted at least partially beneath said rim to press and push said bead (T) away from the rim, and a coupling configuration, in which said tool (3) is in said coupling position and said head is substantially lowered and brought closer to said rim (C) to grip said bead (T) by means of said tool (3);
- translating said operating head (2) along a substantially curvilinear direction and, simultaneously, rotating said tool (3) between said engagement configuration and an extraction configuration, wherein said tool (3) is in said extraction position and said operating head (2) is substantially raised above said rim (C) and substantially brought closer to the rotation axis (A) of said rim (C) to lift said bead (T) above said edge by means of said tool (3).

2. Tool assembly (1) according to claim 1, **characterised in that** said movement means (5) comprise translation means (6, 7, 8, 9, 10) operatively connected to said actuator device (4) and to said operating head (2) and configured to transform the motion generated by said actuator device (4) into a translation motion of said operating head (2) along a substantially curvilinear direction between said insertion configuration, said engagement configuration and said extraction configuration.

3. Tool assembly (1) according to claim 2, **characterised in that** said movement means (5) comprise rotation means (19) operatively connected to said actuator device (4) and to said tool (3) and configured to transform the motion generated by said actuator device (4) into a rotation motion of said tool (3) between said insertion position when said operating head (2) is in the insertion configuration, said engagement position when said operating head (2) is in the engagement configuration and said extraction position when said operating head (2) is in the extraction configuration.

4. Tool assembly (1) according to one or more of the preceding claims, **characterised in that** said translation means (6, 7, 8, 9, 10) comprise a lever system (6, 7, 8, 9) associated with said operating head (2) and at least one curved linear guide 10 associated with said operating head (2) and operatively connected to said lever system (6, 7, 8, 9).

5. Tool assembly (1) according to one or more of the preceding claims, **characterised in that** said lever system (6, 7, 8, 9) comprises an articulated quadrilateral system comprising: at least one support element (6) of said operating head (2) associated with said support structure (S) of the tyre changing machine (M), at least one first lever (7) rotatably associated with said support element (6) in correspondence with a first pin (11), at least one second lever (8) rotatably associated with said support element (6) in correspondence with a second pin (12), at least one connecting bar (9) associated with said first and second lever (8) in correspondence, respectively, with a third pin (13) and a fourth pin (14).

6. Tool assembly (1) according to one or more of the preceding claims, **characterized in that** said operating head (2) is hinged to said lever system (6, 7, 8, 9) at said fourth pin (14).

7. Tool assembly (1) according to one or more of the preceding claims, **characterized in that** said actuator device (4) comprises at least one linear actuator equipped with at least one movable element (15) movable along a direction substantially transverse to the rotation axis (A) of the wheel (R), said movable element (15) being connected to said lever system (6, 7, 8, 9).

8. Tool assembly (1) according to one or more of the preceding claims, **characterized in that** said movable element (15) is connected to at least one of said first lever (7) and said second lever (8).

9. Tool assembly (1) according to one or more of the preceding claims, **characterised in that** the movable element (15) is hinged to said first lever (7) and to said second lever (8) at a fifth pin (16) and a sixth pin (17) respectively.

10. Tool assembly (1) according to one or more of the preceding claims, **characterised in that** said curved linear guide (10) comprises a curvilinear slot (10) made on said operating head (2) and **in that** said lever system (6, 7, 8, 9) comprises at least one pin inserted so as to slide inside said curvilinear slot (10).

11. Tool assembly (1) according to one or more of the preceding claims, **characterised in that** said pin inserted slidingly inside said curvilinear slot (10) corresponds to said sixth pin (17) connecting said mobile element (15) of the actuator device (4) and said second lever (8).

12. Tool assembly (1) according to one or more of the preceding claims, **characterised in that** said rotation means (19) comprise at least one connecting element (19) between said lever system (6, 7, 8, 9) and said tool (3).

13. Tool assembly (1) according to one or more of the preceding claims, **characterised in that** said tool (3) has a substantially elongated shape and has a free end provided with a substantially hooked section and suitable to meet said section of the heel (T), a substantially opposite end associated in a rotatable manner with said connecting element (19) in correspondence with a seventh pin (20) and a substantially intermediate section pivoted on said operating head (2) in correspondence with an eighth pin (21).

14. Tool assembly (1) according to one or more of the preceding claims, **characterised in that** said connecting element (19) comprises at least one rod provided with an end rotatable associated with said lever system (6, 7, 8, 9) at said sixth pin (17) and with an opposite end rotatable associated with said tool (3) at said seventh pin (20).

15. Tool assembly (1) according to one or more of the preceding claims, **characterised in that** said actuator device (4) is provided with a substantially opposite portion rotatable associated with said support structure (S) of the tyre changing machine (M) at a ninth pin (22).
